# EUROPEAN PATENT APPLICATION

(11) **EP 2 453 654 A1**
(43) Date of publication of application: **16.05.2012**
(21) Application number: 11189402.8
(22) Date of filing: 16.11.2011
(51) Int. Cl.: H04N 7/26, H04N 7/18, H04N 21/00, G08B 13/196

(54) **Transmission apparatus and transmission method**

(30) Priority: 16.11.2010 JP 2010256315
(71) Applicant: Canon Kabushiki Kaisha, Tokyo 146-8501 (JP)
(72) Inventor: Utagawa, Yuka, Ohta-ku, Tokyo (JP)
(74) Representative: Garner, Jonathan Charles Stapleton

(57) **Abstract**

A transmission apparatus (100) configured to transmit moving image data to another apparatus inputs (S201) moving image data and, if some of the input moving image data is to be excluded from the moving image data to be transmitted according to a transmission state, excludes (S207, S208) the moving image data of a frame not corresponding to an event out of the input moving image data from the moving image data to be transmitted.

## Description

### BACKGROUND OF THE INVENTION

### Field of the Invention

The present invention relates to an apparatus configured to transmit moving image data and a method thereof.

### Description of the Related Art

Conventionally, there is known a technique called frame skipping. According to the frame skipping, when moving image data is transmitted in real time, a frame waiting to be transmitted can be deleted according to the communication state. U.S. Patent Application Publication No. 2004/0105494 discusses a method that blocks some of the frames when moving image data is transmitted to a plurality of receiving apparatuses. The frames are blocked according to a communication band used in the communication with each of the receiving apparatuses.

However, if this method is used, an important frame may be deleted by the frame skipping.

### SUMMARY OF THE INVENTION

The present invention is directed to reducing the possibility of an important frame being deleted due to frame skipping.

According to a first aspect of the present invention, there is provided a transmission apparatus as specified in claims 1 to 7. According to a second aspect of the present invention, there is provided a transmission method as specified in claims 8 to 12. According to a third aspect of the present invention, there is provided a program as specified in claims 13and 14.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a block diagram illustrating a function configuration of a transmission apparatus according to a first exemplary embodiment of the present invention.

Fig. 2 is a flowchart illustrating processing of the transmission apparatus according to the first exemplary embodiment.

Fig. 3 illustrates a relation between moving image data and events.

Fig. 4 is a block diagram illustrating a function configuration of the transmission apparatus according to a second exemplary embodiment of the present invention.

Fig. 5 is a flowchart illustrating processing of the transmission apparatus according to the second exemplary embodiment.

### DESCRIPTION OF THE EMBODIMENTS

Various exemplary embodiments, features, and aspects of the invention will be described in detail below with reference to the drawings.

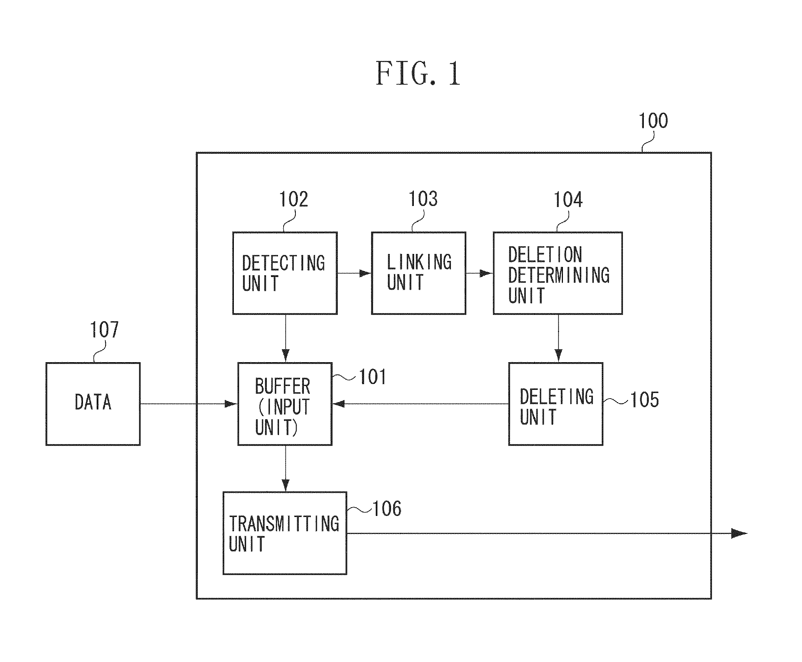

Fig. 1 is a block diagram illustrating a function configuration of a transmission apparatus 100 according to a first exemplary embodiment of the present invention. As illustrated in Fig. 1, the transmission apparatus 100 includes a buffer 101, a detecting unit 102, a linking unit 103, a deletion determining unit 104, a deleting unit 105, and a transmitting unit 106. The transmission apparatus 100 can also include an imaging unit or a microphone. Further, the transmission apparatus 100 can be realized, for example, by a network camera apparatus. Furthermore, the transmission apparatus 100 can be realized, for example, by a server apparatus distributing image data captured by an imaging apparatus to a different computer via a network. The detecting unit 102, the linking unit 103, the deletion determining unit 104, and the deleting unit 105 can be realized by a single processor (computer) . Further, it is also possible to realize the detecting unit 102 by one processor and realize the linking unit 103, the deletion determining unit 104, and the deleting unit 105 by another processor.

The buffer 101 functions as a storage unit for storing data 107. The data 107 includes, for example, moving image data captured by a camera unit. The buffer 101 includes an input unit via which the moving image data transmitted from a camera unit (not illustrated) is input. Frames of moving image data waiting to be transmitted are stored in the buffer 101. It is also possible to configure the transmission apparatus so that moving image data captured by a camera unit (not illustrated) is stored in the buffer 101 as frames of moving image data by a processor.

In addition to moving image data, the data 107 includes various types of information. For example, the data 107 includes audio data input by an audio input unit, sensor data (event detection signal) transmitted from an external sensor that detects an event, and camera control data such as control right of the camera and a change in imaging direction of the camera. However, the data 107 is not limited to such data. The external sensor is, for example, a temperature sensor configured to detect temperature or a tamper detection sensor camera configured to detect tampering. The external sensor can be integral with the transmission apparatus 100 or connected to the transmission apparatus via a network.

The detecting unit 102 detects an event from the data 107 stored in the buffer 101. In other words, the detecting unit 102 detects whether an event has occurred according to the sensor data or the camera control data stored in the buffer 101. Further, the detecting unit 102 detects whether an event (e.g. , motion) has occurred by analyzing moving image data stored in the buffer 101. Further, the detecting unit 102 detects whether an event (e.g., explosion sound) has occurred from the voice data stored in the buffer 101. The detecting unit 102 can be configured such that an output from an external sensor, such as an infrared sensor or a microphone, is input in the detecting unit 102 not via the buffer 101.

The linking unit 103 links the event detected by the detecting unit 102 with the frame of the moving image data. The linking unit 103 of the present embodiment links the event with the frame whose imaging time is the closest to the detection time of the event. However, the linking method is not limited to such a method. For example, a frame whose imaging time is the earliest out of the frames whose imaging has been performed after an event can be linked with that event. Further, a plurality of events can be linked with one frame.

The deletion determining unit 104 determines the frame to be deleted from the buffer 101 according to the state of the buffer 101. Although the transmission apparatus 100 of the present embodiment stores the frame waiting to be transmitted in the buffer 101 and deletes the transmission-completed frame from the buffer 101, the frame waiting to be transmitted overflows the buffer 101 depending on the communication state.

Thus, if the number of frames of the moving image data stored in the buffer 101 exceeds a threshold value, the deletion determining unit 104 of the present embodiment determines a frame to be deleted out of the frames stored in the buffer 101, and provides the deleting unit 105 with identification information of the frame to be deleted. In other words, if the data waiting to be transmitted exceeds a predetermined amount due to low transmission frame rate of the moving image data output by the transmitting unit 106 compared to the frame rate of the moving image data input in the buffer from the camera unit, the deletion determining unit 104 determines the frame which is not to be transmitted (frame to be skipped).

Then, according to the transmission state of the transmitting unit 106, the deletion determining unit 104 excludes some of the moving image data input in the buffer 101 from the moving image data to be transmitted by the transmitting unit 106. If the moving image data is to be excluded, from the moving image data input in the buffer 101, the deletion determining unit 104 excludes the moving image data of a frame that does not correspond to an event from the moving image data to be transmitted by the transmitting unit 106. Further, the deletion determining unit 104 determines the deletion of the moving image data excluded from the moving image data to be transmitted from the buffer 101. Further, it is possible to set the deletion determining unit 104 so that a frame to be deleted in the buffer 101 is determined if a data amount of the moving image data stored in the buffer 101 exceeds a threshold value. The method for determining the frame to be deleted performed by the deletion determining unit 104 will be described below.

The deleting unit 105 deletes the frame to be deleted, which has been determined by the deletion determining unit 104, from the buffer 101. In other words, the deleting unit 105 deletes a frame according to either the number of frames or the data amount of the moving image data stored in the buffer 101.

The transmitting unit 106 transmits the data 107 stored in the buffer 101 to an external apparatus. The data 107 transmitted to the external apparatus includes, for example, moving image data, voice data, event data, and camera control data. Destination of the data 107 is an apparatus such as a storage server that stores moving image or a viewer client that displays moving image data. The data 107 read out from the buffer 101 is transmitted by the transmitting unit 106 to the external apparatus via a local area network (LAN) or the Internet.

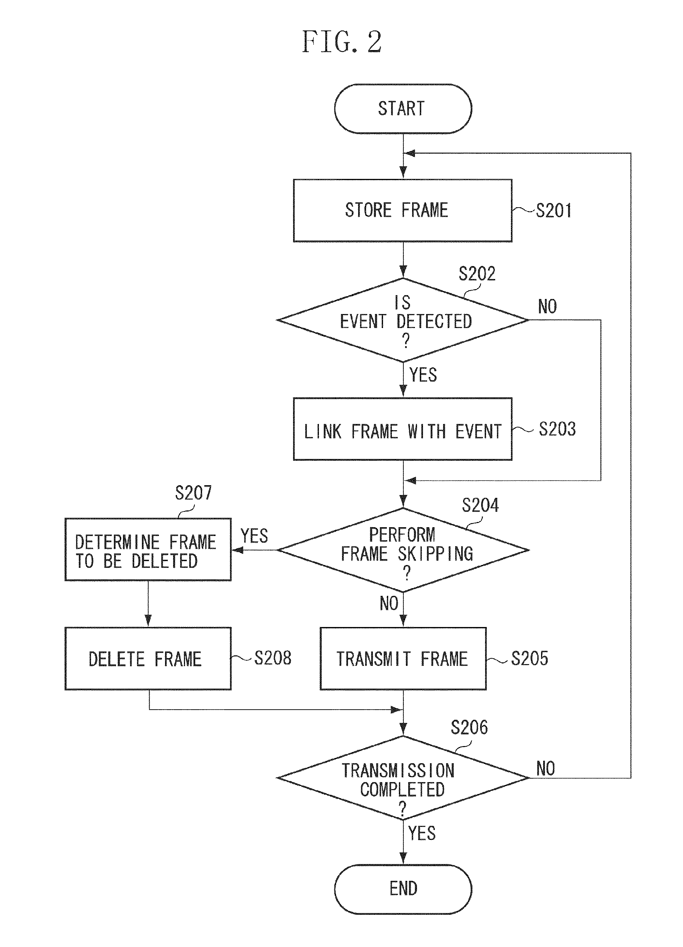

Next, an operation of the transmission apparatus 100 will be described with reference to Fig. 2. Fig. 2 is a flowchart illustrating processing of the transmission apparatus 100 according to the present embodiment. A central processing unit (CPU) of the transmission apparatus 100 reads out a program used for executing processing related to the flowchart in Fig. 2 from a ROM, loads the program into a random access memory (RAM), and executes the program. However, at least a part of the processing in Fig. 2 can be performed by hardware dedicated to the processing.

In step S201, the buffer 101 of the transmission apparatus 100 stores a frame of moving image data input in the buffer 101 by a camera unit (not illustrated) . In step S202, the detecting unit 102 detects an event. The detecting unit 102 determines that an event has occurred if sensor data (an event detection signal) input by an external sensor or a change in camera control data is detected in the data stored in the buffer 101. The camera control data includes, for example, control right regarding remote control, imaging direction, and zoom ratio. Further, the detecting unit 102 according to the present embodiment detects an event by analyzing the moving image data stored in the buffer in step S201. According to the analysis of the moving image data, the detecting unit 102 detects motion, roaming, abandoning, removing, and tampering. For example, the detecting unit 102 determines that an event of tampering has occurred when luminance of the whole frame changes rapidly.

If the detecting unit 102 determines that an event has occurred (YES in step S202), the processing proceeds to step S203. In step S203, the linking unit 103 links the frame stored in step S201 with the event detected in step S202. If an event is detected according to the analysis of the moving image data, the linking unit 103 according to the present embodiment links an event-detected frame with that event. Further, if an event is detected from sensor data, the linking unit 103 links the event with the frame based on the imaging time of each frame and the detection time of the event.

In step S204, the deletion determining unit 104 determines whether a frame in the buffer 101 should be deleted based on a state of the buffer 101. In other words, the deletion determining unit 104 determines that a frame in the buffer 101 should be deleted if the number of frames waiting to be transmitted in the buffer 101 exceeds the threshold value. The deletion determining unit 104 can also determine that a frame in the buffer 101 should be deleted if a data amount of moving image data waiting to be transmitted in the buffer 101 exceeds a threshold value. In other words, if the data waiting to be transmitted exceeds a predetermined amount due to the frame rate of transmission of the moving image data output by the transmitting unit 106 being lower than the frame rate of the moving image data input in the buffer by the camera unit, the deletion determining unit 104 determines that the frame skipping is to be executed.

If the deletion determining unit 104 determines that some of the moving image data input in the buffer 101 is to be excluded from the moving image data to be transmitted by the transmitting unit 106 (YES in step S204), the processing proceeds to step S207. In step S207, out of the moving image data to be transmitted by the transmitting unit 106 and input in the buffer 101, the deletion determining unit 104 determines that the moving image data of a frame that does not correspond to the event concerned is to be deleted and determines the frame to be deleted from the buffer 101.

In step 5208, the deleting unit 105 deletes the frame to be deleted from the buffer 101. In other words, from the buffer 101, the deleting unit 105 deletes a frame not linked with the event according to either the number of frames or the data amount of the moving image data stored in the buffer 101.

In step S204, if the deletion determining unit 104 determines that a frame is not to be excluded (NO in step S204), the processing proceeds to step S205. In step S205, the transmission unit 106 reads the frame of the moving image data stored in the buffer 101 and transmits the frame to the external apparatus. Although an image recording server or a viewer client connected via a network is assumed as the apparatus to which the data is transmitted, the data can also be transmitted to a locally connected apparatus.

Further, if a plurality of frames that are not linked with the event is stored in the buffer 101, the deletion determining unit 104 determines that the earliest frame is the frame to be deleted.

Further, in step S207, if all the frames stored in the buffer 101 are linked with an event, the frame to be deleted is determined by the deletion determining unit 104 according to a method described below.

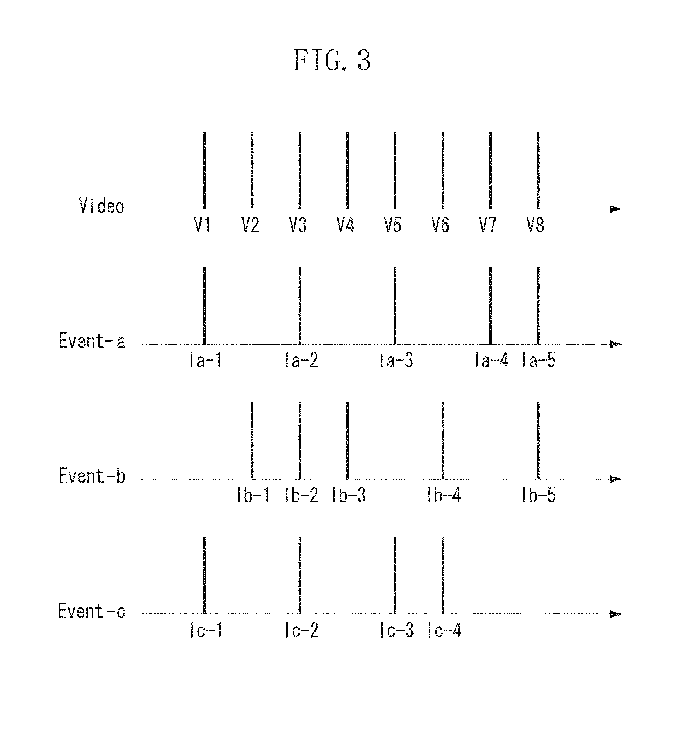

A determination method of a frame to be deleted will be described with reference to Fig. 3. In Fig. 3, frames V1 to V8 are consecutive frames of moving image data currently stored in the buffer 101. The frame V1 is the oldest frame and the frame V8 is the newest frame. Further, Ia-1 to Ia-5 indicate the occurrence time of an Event-a detected in the sensor data. Further, Ib-1 to Ib-5 indicate the occurrence time of an Event-b detected according to analysis of the moving image data by the detecting unit 102. Further, Ic-1 to Ic-4 indicate the occurrence time of an Event-c detected in the camera control data.

If a plurality of external sensors is provided, various types of events can be detected. Further, different types of events can be detected according to analysis of the moving image data.

Further, in Fig. 3, the frame V1 is linked with Ia-1 and Ic-1, the frame V2 is linked with Ib-1, the frame V3 is linked with Ia-2, Ib-2, and Ic-2, the frame V4 is linked with Ib-3, and the frame V5 is linked with Ia-3 and Ic-3. Further, the frame V6 is linked with Ib-4 and Ic-4, the frame V7 is linked with Ia-4, and the frame V8 is linked with Ia-5 and Ib-5.

Regarding the buffer 101 illustrated in Fig. 3, all the frames stored in the buffer are linked with an event. In Fig. 3, the maximum number of frames which can be stored as the frames waiting to be transmitted in the buffer 101 is seven. Since the frame V8 is stored, the number of frames stored in the buffer exceeds the maximum number. Accordingly, a frame in the buffer 101 will be deleted.

Next, a method for determining a frame to be deleted based on priority set by the user for each event will be described. According to this method, the user that receives the moving image data determines the priority of each event as well as the event to be detected. The priority of the deletion determining unit 104 is determined before the frame skipping is performed.

For example, if the priority of the Event-a detected in the sensor data is given a higher priority compared to other events, the deletion determining unit 104 determines that the frames V2, V4, and V6, which are not linked with the Event-a, as the frames to be deleted. In other words, if a frame linked with the Event-b and a frame linked with the Event-a whose priority is higher than the Event-b are stored in the buffer 101, the deleting unit 105 deletes the frame linked with the Event-b but not linked with the Event-a from the buffer 101.

The user can change the priority of an event at arbitrary timing.

Next, a method for determining a frame to be deleted based on the number of occurrence times of each event will be described. According to this method, the frame to be deleted is determined based on the number of times each event has been detected in a period corresponding to the frames stored in the buffer 101. In other words, in the period of the frames V1 to V8, if the Events-a and b are detected five times, respectively, and the Event-c is detected four times, the deletion determining unit 104 selects the frame to be deleted from the frames linked with the Event-a or b but not with the Event-c. In this manner, a frame linked to the Event-c, which is an event not detected as much as others, is transmitted to the external apparatus on a priority basis.

Next, a method for determining the frame to be deleted based on the priority of each event, which is set according to the operation mode of the transmission apparatus 100 or the destination of the moving image data, will be described. For example, if the destination of the moving image data is set to a moving object monitoring mode, the Event-b, which is detected according to the analysis of the moving image data, will be given a higher priority than other events. In this case, the deletion determining unit 104 determines that the frame V1 or V5 (or V7) is to be deleted.

Further, for example, if the destination of the moving image data is set to a camera remote control mode, the Event-c, which is detected according to occurrence of a camera control event, will be given a higher priority than other events. In this case, the deletion determining unit 104 determines that the frame V2 or V4 (or V7 or V8) is to be deleted. The number of frames that can be deleted at a time can be one or more.

If one frame is to be deleted at a time, out of the frames that can be deleted, which are the frames not linked with the Event-c, the frame V2, which is the oldest frame, is deleted. In other words, if the number of frames to be deleted at a time is smaller than the number of frames that can be deleted, the deletion determining unit 104 determines that the oldest frame is the frame to be deleted. For example, out of the frames not linked with the Event-c, the frame V2, which is the oldest of such frames, is deleted.

Next, a method for determining the frame to be deleted based on the number of events that are linked will be described. According to this method, out of the frames stored in the buffer 101, the frame having the least number of linked events is determined as the frame to be deleted. According to the example in Fig. 3, the deletion determining unit 104 determines that the frame V2 or V4 (or V7) is the frame to be deleted.

Next, a method for determining the frame to be deleted based on the number of linked events and the priority of the events will be described. According to this method, a point is assigned to each event depending on the priority. Further, a total number of points of an event corresponding to each frame is calculated. Then, a frame whose total point is the smallest is selected as the frame to be deleted. For example, if one point is assigned to the Event-a, two points are assigned to the Event-b, and three points are assigned to the Event-c, the deletion determining unit 104 determines that the frame V7 is to be deleted.

Next, a method for determining a frame to be deleted based on whether the content of an event can be assumed from a preceding or a succeeding frame will be described. According to this method, for example, if the Event-b is related to motion detection, the deletion determining unit 104 determines the frame to be deleted from the frames linked with the Event-b. This is because if a frame is linked with the Event-b, which is related to motion detection, since, in many cases, the content of the frame can be assumed from a preceding or a succeeding frame, it is deleted before other frames linked with different events are deleted.

In other words, since an event related to motion detection is normally linked with a plurality of continuous frames, even if one frame is deleted, in most cases, the content of the event can be assumed from other frames. Thus, the deletion determining unit 104 gives a higher priority to a frame linked with the Event-b in determining the frame to be deleted than the frames linked with other events. Thus, if a frame linked with the Event-b, which is linked with a plurality of continuous frames, and a frame linked with the Event-a or c, which is not linked with a plurality of continuous frames, the deleting unit 105 deletes the frame corresponding to the Event-b.

In deleting a frame corresponding to the Event-b, the frame V3, which is the middle of the frames V2, V3, and V4 that are linked with the Event-b, can be deleted or, for example, the frame to be deleted can be determined based on variation of each of the frames V2, V3, and V4. For example, among the frames V2, V3, and V4, if the variation between the frames V2 and V3 is larger than the variation between the frames V3 and V4, the deletion determining unit 104 determines that either of the frames V3 and V4, for example, the frame V4, is to be deleted.

The determination method of the frame to be deleted is not limited to the above-described example. Further, the frame to be deleted can be determined according to a combination of the above-described methods.

In step S206, after the transmission of the frame in step S205 is completed or after the deletion of the frame to be deleted in step S208, whether to terminate the transmission processing of the moving image data is determined. If the transmission processing is to be continued (NO in step S206), the processing returns to step S201. If the transmission processing is completed (YES in step S206), then the processing ends.

Although the transmission processing of the moving image data has been described with reference to Fig. 2, the transmitting unit 106 can also transmit event data to an external apparatus. The event data transmitted to the external apparatus includes, for example, event type, data of a position or a circumscribed rectangle of a moving object, identification information of a user having the camera control right, occurrence time of an event such as tampering or sound of an explosion. Further, camera-related data such as pan angle, tilt angle, and zoom ratio can be included in the event data. If the detection of a moving object is used only for determining a frame to be deleted, the data of the moving object is not necessarily transmitted to the external apparatus. Further, if both the audio data and the moving image data exist, the transmitting unit 106 transmits the audio data together with the moving image data.

According to the above-described exemplary embodiment, a frame to be deleted is determined based on a relation of a frame, an event detected in data such as sensor data or camera control data acquired from an external apparatus, and an event detected according to analysis of moving image data.

Regarding the above-described events, the frame to be deleted can be determined based on a relation between at least one event and a frame. For example, if a frame to be deleted is determined based on a relation between an event and a frame detected in data acquired from an external apparatus, the frame to be deleted can be determined without executing the analysis of the moving image data.

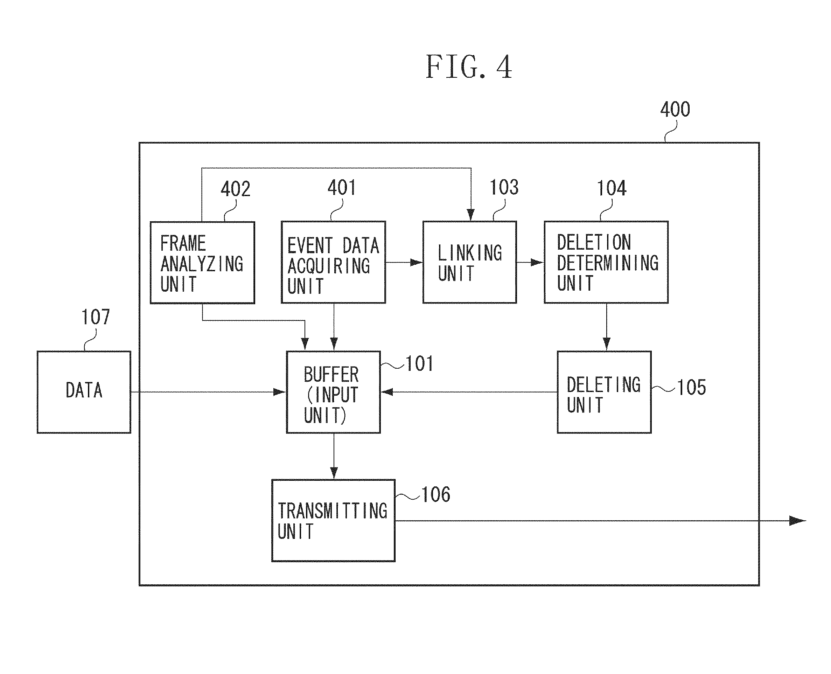

Fig. 4 is a block diagram illustrating a function configuration of a transmission apparatus 400 according to a second exemplary embodiment of the present invention. In place of the detecting unit 102 of the transmission apparatus 100, the transmission apparatus 400 includes an event data acquiring unit 401 and a frame analyzing unit 402.

The event data acquiring unit 401 acquires camera control data and sensor data included in the data 107 stored in the buffer 101, and detects the occurrence of an event. The event data acquiring unit 401 can also acquire sensor data being external data not via the buffer 101.

Further, the frame analyzing unit 402 analyzes the moving image data included in the data 107 and determines whether an event has occurred. The event detected by the frame analyzing unit 402 includes, for example, motion, roaming, removing, abandoning, and tampering.

If a moving object is on the screen for a fixed time period, the frame analyzing unit 402 determines that a roaming event has occurred. Further, the frame analyzing unit 402 determines that a removing event has occurred if a person on the screen removes a bag. Further, the frame analyzing unit 402 determines that an abandoning event has occurred if a person on the screen leaves a bag behind. The detection method of the events used by the event data acquiring unit 401 and the frame analyzing unit 402 is similar to the detection method used by the detecting unit 102 illustrated in Fig. 1.

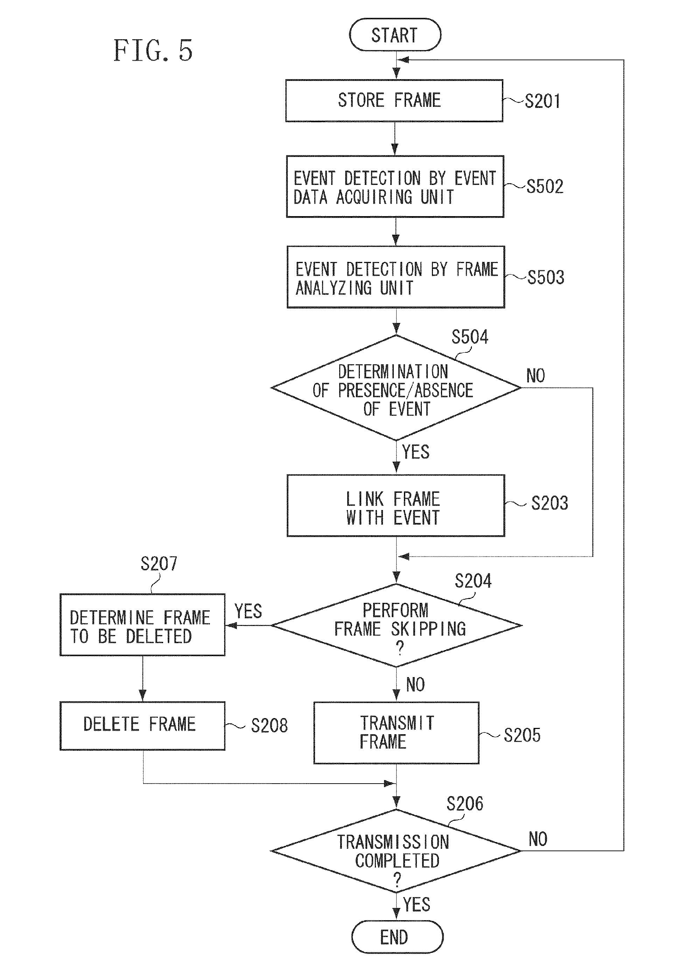

Fig. 5 is a flowchart illustrating processing of the transmission apparatus 400. The flowchart is similar to the flowchart illustrated in Fig. 2 except that the processing in step S202 is replaced with steps S502, S503, and S504. In step S502, the event data acquiring unit 401 performs event detection. In step S503, the frame analyzing unit 402 performs event detection. In step S504, presence/absence of the event is determined based on the event detection in steps S502 and S503. The event detection performed by the event data acquiring unit 401 can be executed in parallel with the event detection performed by the frame analyzing unit 402. Further, the event detection performed by the frame analyzing unit 402 can be executed before the event detection is performed by the event data acquiring unit 401.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium) .

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A transmission apparatus (100, 400) configured to transmit moving image data to another apparatus, the transmission apparatus comprising:
input means (101) configured to input moving image data;
transmitting means (106) configured to transmit the moving image data input by the input means; and
excluding means (104, 105) configured to exclude, if some of the moving image data input by the input means is to be excluded from the moving image data to be transmitted by the transmitting means according to a transmission state of the transmitting means, moving image data of a frame not corresponding to an event out of the moving image data input by the input means from the moving image data to be transmitted by the transmitting means.

2. A transmission apparatus according to claim 1, wherein the input means includes storage means (101) configured to store the input moving image data, and
wherein the excluding means includes detecting means (102, 401, 402) configured to detect the event, determining means (103) configured to determine a frame corresponding to the detected event, and deleting means (105) configured to delete the moving image data of the frame not corresponding to the event from the storage means according to at least either a number of frames or a data amount of the moving image data stored in the storage means so that the frame not corresponding to the event is not transmitted by the transmitting means.

3. A transmission apparatus according to claim 1 or claim 2, wherein the excluding means includes detecting means (102, 402) configured to detect the event according to an analysis of the moving image data.

4. A transmission apparatus according to any preceding claim, wherein the excluding means includes detecting means (102, 401) configured to detect the event according to a signal from an external sensor.

5. A transmission apparatus according to any preceding claim, wherein, out of a frame corresponding to a first event and a frame corresponding to a second event which is given a higher priority than the first event, the excluding means is configured to exclude the moving image data of the frame corresponding to the first event from the moving image data to be transmitted by the transmitting means.

6. A transmission apparatus according to any of claims 1 to 4, wherein, out of a first number of frames corresponding to a first event and a second number of frames corresponding to a second event, the excluding means is configured to exclude the moving image data of the frame corresponding to the second event, the number of frames corresponding to which is larger, from the moving image data to be transmitted by the transmitting means.

7. A transmission apparatus according to any of claims 1 to 4, wherein, out of a first event that corresponds to a plurality of frames and a second event that corresponds to a single frame, the excluding means is configured to exclude the moving image data of the frame corresponding to the first event from the moving image data to be transmitted by the transmitting means.

8. A transmission method for a transmission apparatus (100, 400) configured to transmit moving image data to another apparatus, the transmission method comprising:
inputting (S201) moving image data;
transmitting (S205) the input moving image data; and
if some of the input moving image data is to be excluded from the moving image data to be transmitted according to a transmission state of the transmission apparatus, excluding (S207, S208) moving image data of a frame not corresponding to an event out of the input moving image data from the moving image data to be transmitted.

9. A transmission method according to claim 8, further comprising:
storing (S201) the input moving image data in storage means;
detecting the event;
determining a frame corresponding to the detected event; and
deleting (S208) moving image data of a frame that does not correspond to the event from the storage means according to at least either a number of frames or a data amount of the moving image data which is stored so that the moving image data of a frame that does not correspond to the event is not transmitted.

10. A transmission method according to claim 8, further comprising, out of a frame corresponding to a first event and a frame corresponding to a second event which is given a higher priority than the first event, excluding the moving image data of the frame corresponding to the first event from the moving image data to be transmitted.

11. A transmission method according to claim 8, further comprising, out of a first number of frames corresponding to a first event and a second number of frames corresponding to a second event, excluding the moving image data of the frame corresponding to the second event, the number of frames corresponding to which is larger, from the moving image data to be transmitted.

12. A transmission method according to claim 8, further comprising, out of a first event that corresponds to a plurality of frames and a second event that corresponds to a single frame, excluding the moving image data of the frame corresponding to the first event from the moving image data to be transmitted.

13. A program that, when executed by a transmission apparatus, causes the transmission apparatus to execute a method according to any of claims 8 to 12.

14. A computer-readable storage medium storing a program according to claim 13.
